# EUROPÄISCHE PATENTANMELDUNG

(11) **EP 1 634 826 A1**
(43) Veröffentlichungstag der Anmeldung: **15.03.2006**
(21) Anmeldenummer: 04021842.2
(22) Anmeldetag: 14.09.2004
(51) Int. Cl.: B65G 47/64

(54) **Vorrichtung und Verfahren zum Stapeln von Stückgut in einem Transportbehälter**

(71) Anmelder: SIEMENS AKTIENGESELLSCHAFT, 80333 München (DE)
(72) Erfinder: Gallizia, Carlo, Dr., 20148 Mailand (IT); Mignano, Paolo, 28043 Bellinzago Novarese (NO) (IT)

(57) **Zusammenfassung**

Die Erfindung betrifft eine Vorrichtung und Verfahren zum Stapeln von Stückgut in einem Transportbehälter. Um mit einfachen aber wirkungsvollen Mittel das direkte Stapeln, auch von mehreren nebeneinander angeordneten Stapeln in einem Transportbehälter vollautomatisch und mit hoher Leistung zu ermöglichen, wird vorgeschlagen,
unmittelbar unterhalb des Zuförderers (3) einen Übergabeförderer (5)anzuordnen ist, der aus einer Übernahmeposition für das Stückgut (2) horizontal in eine Übergabestellung bewegbar ist, in der sich das Stückgut (2) auf dem Transportband (6) des Übergabeförderers (5) oberhalb seiner im Transportbehälter (8) vorgesehenen Stapelposition (A;B) befindet, und den Übergabeförderer (5) zum Übergeben des Stückgutes (2) in den Transportbehälter (8) aus dieser Position heraus mit der gleichen Geschwindigkeit in die Übernahmeposition zurückbewegbar ist, mit der die Auflageseite des Transportbandes (6) des Übergabeförderers (5) relativ zum Übergabeförderer (5) in der entgegengesetzten Richtung (10) bewegbar ist.

## Beschreibung

Die Erfindung betrifft eine Vorrichtung und Verfahren zum Stapeln von Stückgut in einem Transportbehälter, insbesondere zum Befüllen von Kartons oder Kisten mit flachen stapelfähigen Packungen oder Paketen, die über mindestens einen Zuförderer in den Bereich des Transportbehälters transportiert und in diesen geordnet übergeben werden.

Es ist bekannt und üblich, Stückgut zu Versandzwecken in Transportbehältern zu verpacken und, insbesondere wenn es sich um stapelförmiges Gut von gleichen oder ähnlichen Abmessungen handelt, in den Transportbehältern Stapel zu bilden, die den Behälter gut ausfüllen, um die Ware raumsparend und sicher transportieren zu können. Dabei können in dem Transportbehälter, in der Regel einem Karton oder in einer Kiste, auch mehrere nebeneinander angeordnete Stapel vorgesehen sein, wenn der Platz dafür ausreicht. Die Transportbehälter sind gewöhnlich am Ende eines Förderers aufgestellt, der Teil einer Sortier- oder Kommissionieranlage sein kann, in der das Stückgut auftrags- oder zielbezogen zusammengestellt wird, um es dem Transportbehälter zuzuführen. Das Stapeln der Stückgutteile erfolgt meistens von Hand, insbesondere wenn mehrere Stapel für einen Transportbehälter gebildet werden sollen.

Es ist auch bekannt, mit Hilfe von Zu- und Abförderern mehr oder weniger automatisch aus dem Stückgut oder Paketen in einer speziellen Vorrichtung Stapel zu bilden, die anschließend als solche einer Verpackungseinheit zugeleitet und in diese maschinell oder von Hand eingesetzt werden (DE 199 63 021 A1). Diese Vorrichtung gestattet jedoch nicht das Stapeln unmittelbar in den Transportbehälter und auch nicht das direkte Stapeln mehrerer nebeneinander angeordneter Stapel. Daher ist die bekannte Einrichtung umständlich und aufwändig, insbesondere wenn das Stapeln in die Transportbehälter in Versandzentren mit einer großen Anzahl von Versandarbeitsplätzen erfolgen soll.

Die Aufgabe der vorliegenden Erfindung besteht darin, eine Vorrichtung und ein Verfahren zum Stapeln von Stückgut in einen Transportbehälter so zu gestalten, dass mit einfachen aber wirkungsvollen Mittel das direkte Stapeln, auch von mehreren nebeneinander angeordneten Stapeln in den Transportbehälter vollautomatisch und mit hoher Leistung möglich ist.

Zur Lösung der Aufgabe wird eine Vorrichtung vorgeschlagen, die gekennzeichnet ist, durch einen unmittelbar unterhalb des Zuförderers zwischen diesem und dem Transportbehälter angeordneten Übergabeförderer, der aus einer Übernahmeposition für das Stückgut, in der sich mindestens das frei auskragende vordere Ende des Übergabeförderers unterhalb des freien Endes des Zuförderers befindet, horizontal in eine Übergabestellung bewegbar ist, in der sich das Stückgut oberhalb seiner im Transportbehälter vorgesehenen Stapelposition befindet, und dass der Übergabeförderer zum Übergeben des Stückgutes in den Transportbehälter aus dieser Position heraus mit der gleichen Geschwindigkeit in die Übernahmeposition zurückbewegbar ist, mit der die Auflageseite des Transportbandes des Übergabeförderers relativ zum Übergabeförderer in der entgegengesetzten Richtung bewegbar ist.

Die erfindungsgemäße Vorrichtung zum Stapeln von Stückgut besteht im Wesentlichen aus zwei aufeinander abgestimmten Bandförderern, von denen der erste dem Zufördern des Stückgutes dient, welches auf den zweiten Übergabeförderer überführt wird, der das Stückgut in eine Position bringt, in der es unmittelbar über dem vorgesehenen Stapelplatz liegt. Zu diesem Zweck ist das Übergabeband horizontal gegenüber dem Zuförderband bewegbar, wobei die Bewegungsrichtung im Wesentlichen der Transportrichtung des Zuförderbandes entspricht. Auf diese Weise kann ein Stückgutteil, dass das freie Ende des Zuförderers verlässt, direkt und unmittelbar von dem darunter angeordneten Übergabeförderer übernommen werden, der es durch seine Horizontalbewegung in einen Bereich oberhalb des Transportbehälters transportiert. Da der Übergabeförderer in beiden Richtungen horizontal bewegbar ist, kann er durch Zurückfahren in seine Ausgangsposition die obere Öffnung des Transportbehälters freigeben, wobei nur dafür Sorge getragen werden muss, dass das auf dem Transportband des Übergabeförderers aufliegende Stückgut diese Zurückbewegung nicht zusammen mit dem Übergabeförderer ausführt, sondern an der vorgesehenen Stelle, wo es gestapelt werden soll, abgeworfen wird.

Das wird im Wesentlichen erfindungsgemäß dadurch erreicht, dass die Transport- und Bewegungsgeschwindigkeiten des Zuförderbandes und des Übergabebandes steuerbar sind, wobei vorzugsweise das Zuförderband als Pufferband ausgebildet ist. Durch letztere Maßnahme wird sichergestellt, dass nicht mehrere Stückgutteile gleichzeitig vom Zuförderband auf den Übergabeförderer übergeben werden, wodurch das sorgfältige Stapeln gestört werden würde. Dies lässt sich durch das Puffern, der auf dem Zuförderband herantransportierten Stückgutteile erreichen, und zwar in bekannten Weise, die hier nicht weiter beschrieben werden muss.

Um die richtige Position des Stückgutes zu ermitteln, in der dieses in den Transportbehälter abgeworfen werden soll, um dort den gewünschten Stapel zu bilden, ist ein Sensor vorgesehen, der die exakte Übergabestellung des Stückgutes ermittelt. Dieser Sender kann vorzugsweise eine Fotozelle oder dergleichen sein.

Das Abwerfen des Stückgutes in den Transportbehälter erfolgt, in dem das Transportband während der Zurückbewegung des Übergabeförderers in die Übernahmeposition mittels einer an einem feststehenden Rahmenteil angeordneten Blockiervorrichtung bei sich frei drehende Umlenkrollen des Transportbandes festsetzbar ist. Durch diese Maßnahme wird erreicht, dass das Transportband bezogen auf die Gesamtvorrichtung stehen bleibt, während der Übergabeförderer sich horizontal in seine Übernahmeposition zurückbewegt. Bei dieser Zurückbewegung werden die Umlenkrollen des Transportbandes entgegen der Bewegungsrichtung des Übergabeförderers in Drehung versetzt und rollen praktisch innerhalb des stillstehenden Transportbandes ab. Dadurch verkürzt sich der den Transportbehälter übergreifende Bereich des Übergabeförderers in dem Maße, in dem sich der Übergabeförderer horizontal bewegt, so dass der das Stückgut tragende Bereiche, auf dem das Stückgut aufliegt, sich unterhalb des Stückgutes wegbewegt, bis dieses an der vorgesehenen Stelle in den Transportbehälter fällt.

Bevorzugt ist die Blockiervorrichtung für das Transportband des Übergabeförderers am Rahmen des Zuförderers angeordnet, es kann jedoch auch an anderen feststehenden Rahmenteilen der Vorrichtung befestigt sein. Die Blockiervorrichtung ist sehr einfach gegenüber der anderen denkbaren Lösung, bei der Transportband mit der gleichen Geschwindigkeit und über gleiche Wegstrecke angetrieben wird, wie die Geschwindigkeit und der Weg des Übergabeförderers in entgegengesetzter Richtung, so dass gleichermaßen das Transportband relativ zum Rahmen der Vorrichtung stehen bleibt, weil beide Bewegungen und Geschwindigkeiten sich gegeneinander aufheben.

Die erfindungsgemäße Lösung ermöglicht es in vorteilhafter Weise auch mehrere nebeneinander oder sich geordnet überlappende Stapel von Stückgütern in einem und demselben Transportbehälter zu stapeln, indem die Horizontalbewegung des Übergabeförderers in Relation zu dem vorgesehenen Stapelmuster steuerbar ist. Auf diese Weise kann praktisch jeder beliebige Platz innerhalb des Transportbehälters belegt werden, je nach dem wo die Vorrichtung in Abstimmung der Transportbewegungen der Förderer und des Transportbandes das Stückgut zum Abwurf positioniert.

Vorzugsweise ist der Zuförderer gegenüber dem horizontalen Übergabeförderer in einem spitzen Winkel geneigt angeordnet und überbrückt beispielsweise den Abstand zu einem oberhalb umlaufenden Sorter, von dem die Stückgutteile herantransportiert werden. Es können auch zwei oder mehrere Zuförderer hintereinander angeordnet sein.

Die Blockiervorrichtung für das Transportband kann über einen pneumatischen oder elektrischen Kolben- Zylinderantrieb aktiviert werden und wirkt unmittelbar auf das Band ein.

Zur Horizontalbewegung des Übergabeförderers sind verschiedene Antriebsarten denkbar, so kann die Bewegung über einen Schubstangenantrieb ebenso erfolgen, wie über einen Zahnstangen oder Zahnriemenantrieb. Auch die Bewegung mittels eines Linearmotorantriebes ist nach der Erfindung denkbar.

Vorzugsweise wird die erfindungsgemäße Vorrichtung zwischen einem Sorter, beispielsweise einem Kippschalen- oder Querbandsorter und einer Verpackungsstation eingesetzt.

Ein Arbeitsverfahren zum Stapeln von Stückgut in einer Vorrichtung nach dem Patentanspruch 1 ist gekennzeichnet durch die folgenden Arbeitsschritte:
a) Das mit gesteuerter Transportgeschwindigkeit auf den Zuförderer transportierte Stückgut wird, gegebenenfalls nach einer Zwischenpufferung, an das frei auskragende vorderer Ende des Übergabeförderers unterhalb des freien Endes des Zuförderers übergeben,
b) der Übergabeförderer bewegt sich währen der Übernahme des Stückgutes horizontal in Transportrichtung des Zuförderers,
c) das Transportband des Übergabeförderers steht relativ zum horizontal bewegbaren Übergabeförderers still und bewegt das aufliegende Stückgut weiter in die Übergabestellung, in der sich das Stückgut oberhalb seiner in Transportbehälter vorgesehenen Stapelposition befindet,
d) das Transportband wird gegenüber dem Rahmen der Vorrichtung festgelegt, während der Übergabeförderer in seine Übernahmeposition zurückgefahren wird,
e) das Stückgut bleibt zunächst in seiner Übergabeposition auf dem blockierten Transportband und wird in den Transportbehälter definiert abgeworfen, so bald sich die dem Transportbehälter nahe Umlenkrolle des Transportbandes und damit der das Stückgut abstützende Bereich des Transportbandes zusammen mit dem Übergabeförderer unter dem Stückgut wegbewegt hat.

Vorzugsweise erfolgt die Bewegung des Übergabeförderers in seine Übernahmeposition mit gegenüber seiner Bewegung in die Übergabestellung erhöhter Geschwindigkeit. Dadurch wird ein sicheres und zielgenaues Abwerfen des Stückgutes in den Transportbehälter gewährleistet.

Die vorgeschlagene Vorrichtung und das Arbeitsverfahren zum Stapeln ermöglichen einen weitgehend automatischen Ablauf zum Bilden von Stückgutstapeln in Transportbehältern, insbesondere in Kartons, mit einer sehr einfachen und funktionssicheren Vorrichtung. Die Steuerung der Anlage ist bei Verwendung der Blockiervorrichtung äußerst einfach, weil die aufwendige Abstimmung von Antriebsmotoren durch das bloße Stillsetzen des Tragbandes entbehrlich wird. Das Abwerfen des Stückgutes kann zielgenau in den Transportbehälter erfolgen, gleichgültig ob nur ein Stapel oder mehrere Stapel in den Behälter gebildet werden sollen. Die Vorrichtung ergänzt vorteilhafterweise einen Sorter, wie er beispielsweise in Versandhäusern eingesetzt wird und wo Stückgutteile sortiert und transportiert werden, die ähnliche oder gleiche Abmessungen aufweisen und die flach genug sind, um sie zu stapeln.

Ein Ausführungsbeispiel der Erfindung ist in der Zeichnung dargestellt und wird nachfolgend beschrieben. Es zeigt:
- Figur 1: eine Gesamtansicht der Vorrichtung zum Stapeln von Stückgut nach der Erfindung und
- Figur 2 - 5: die Bewegungsabläufe der Vorrichtung nach Fig. 1 beim Stapeln von Stückgut

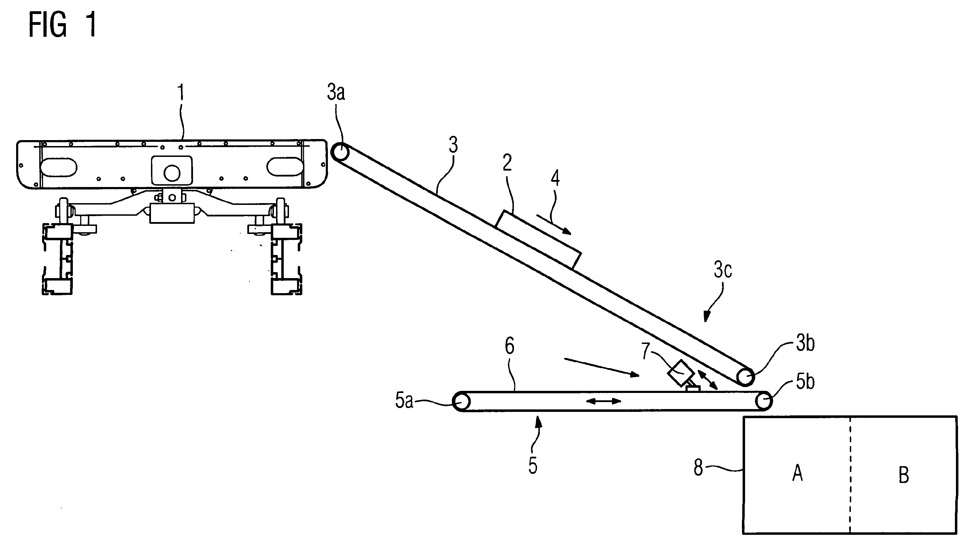

Figur 1 zeigt eine Ansicht einer erfindungsgemäßen Vorrichtung zum Stapeln von Stückgut in Verbindung mit einem Sorter. Der Sorter ist in Figur 1 insgesamt mit 1 bezeichnet, es handelt sich hier um einen Querbandsorter bekannter Bauart, der hier nicht weiter beschrieben werden soll. Das auf dem Sorter 1 herantransportierende Stückgut besteht im Ausführungsbeispiel aus einem flachen Paket 2, das vom Sorter 1 auf das Zuförderband 3 übergeben wurde. Das Zuförderband 3 ist in Pfeilrichtung 4 um die Umlenkrollen 3a, 3b gesteuert antreibbar und kann gegebenenfalls mit einem Puffer versehen sein, mit dem Pakete 2 vor der Übergabe angehalten werden können, bis der Übergabebereich frei ist. Unterhalb des Zuförderbandes 3 ist bei 5 ein erfindungsgemäßer Übergabeförderer dargestellt, dessen Tragband 6 um die Umlenkrollen 5a und 5b geführt ist. Bei 7 ist eine Blockiervorrichtung für das Tragband 6 gezeichnet, deren Funktion später noch beschrieben wird. Mit 8 bezeichnet die Erfindung einen Transportbehälter, der in zwei Bereiche A und B unterteilt ist, in denen die Pakete 2 zu zwei nebeneinander angeordneten Stapeln aufgestapelt werden sollen. Es handelt sich bei dem Transportbehälter um einen Karton.

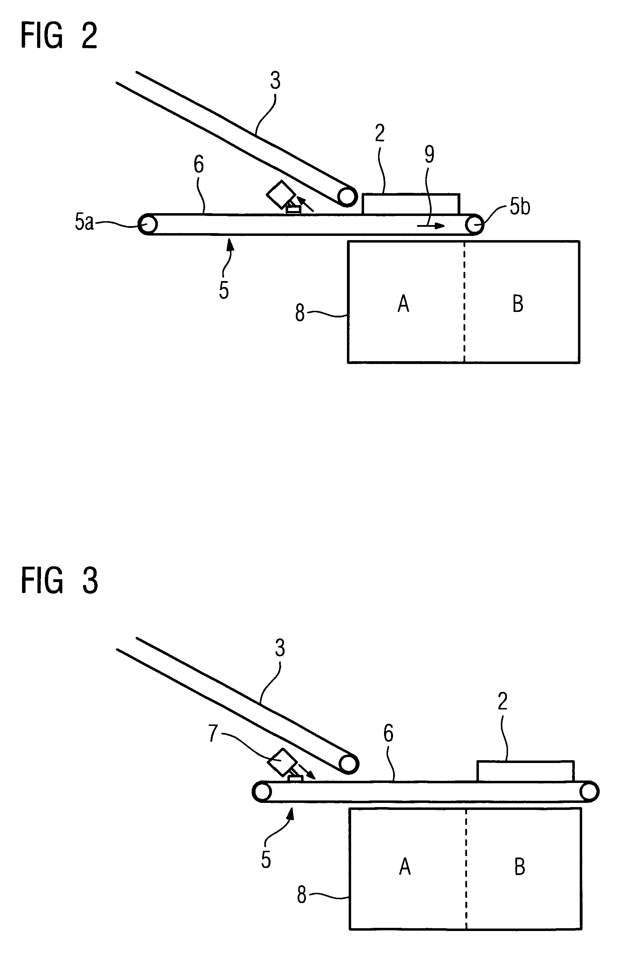

Die Bewegungsabläufe der erfindungsgemäßen Vorrichtung sind in den Figuren 2 - 5 dargestellt und werden nun beschrieben:
Beim Transport des Paketes 2 auf dem Zuförderer 3 in Pfeilrichtung 4 (Figur 1) wurde das Paket 2 auf den Übergabeförderer 5 überführt (Figur 2), der sich, vorzugsweise mit Transportgeschwindigkeit des Zuförderers 3 in Pfeilrichtung 9 horizontal in der Transportrichtung des Zuförderers 3 bewegt. Das Tragband 6 ist dabei weder angetrieben noch blockiert, sondern befindet sich im Freilauf der Rollen 5a und 5b. In der Figur 2 erkennt man das Paket 2 oberhalb des mit A gekennzeichneten Stapelplatzes des Transportbehälters 8. Da das Paket aber in die Stapelposition B des gleichen Transportbehälters 8 abgeworfen werden soll, wird der Übergabeförderer 5 in Pfeilrichtung 9 weiterbewegt, bis er die in Figur 3 dargestellte Position erreicht hat. In dieser Position liegt das Paket 2 exakt über dem Bereich, in den das Paket zum Stapeln abgeworfen werden soll.

Bevor nun der Übergabeförderer 5 in seine in Figur 1 gezeigte Übernahmeposition (Ausgangsposition) zurückbewegt wird, tritt die Blockiervorrichtung 7 in Kraft, die zuvor außer Funktion war. Die Blockiervorrichtung 7 drückt pneumatisch auf das Transportband 6 des Übergabeförderers 5 und verhindert ein Verschieben desselben mit dem aufliegenden Paket 2 aus der erreichten Übergabeposition (Figur 3). Wird nun bei weiter blockiertem Transportband 6 der Übergabeförderer 5 wie die Pfeile 10 verdeutlichen, sehr schnell zurückgefahren, so bewegen sich zwar die Umlenkrollen 5a und 5b zusammen mit dem Übergabeförderer in Pfeilrichtung und wickeln sich dabei an der Innenseite des Tragbandes 6 ab; das Tragband 6 selbst behält jedoch relativ zum Transportbehälter seine Position bei und unterstützt das Paket 2 so lange bis die vordere Umlenkrolle 5b sich unter dem Paket 2 hinwegbewegt hat und dadurch die Auflagefläche des Transportbandes 6 unter dem Paket 2 "weggerollt" hat. Das Paket 2 fällt wie bei 11 angedeutet nahezu senkrecht nach unten und bildet die erste Lage des Stapels, der sich bildet, wenn der beschriebene Vorgang mehrfach wiederholt wird.

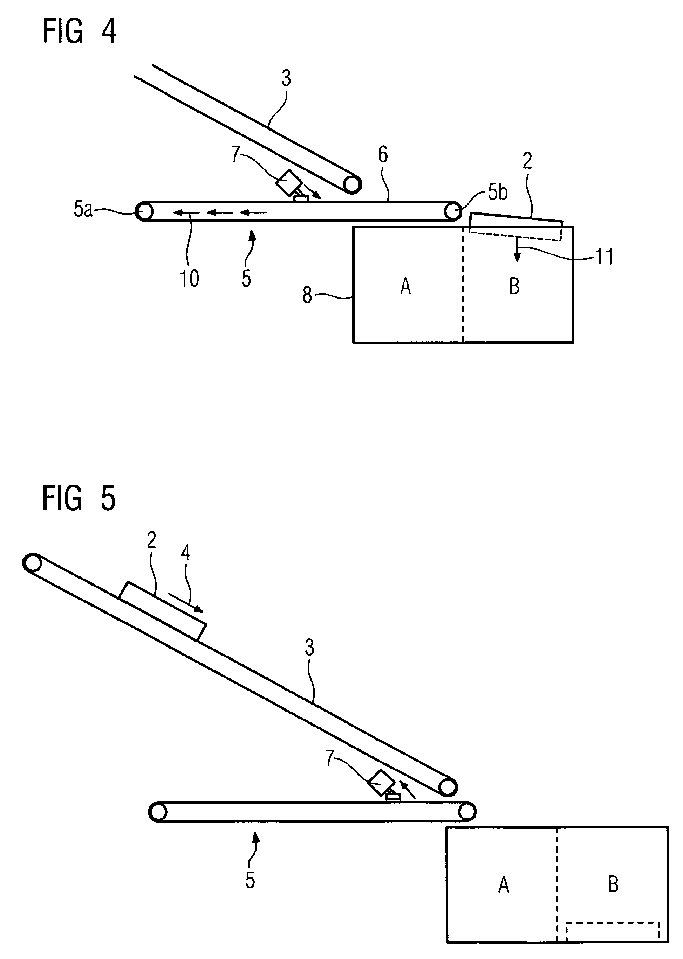

Sobald der Übergabeförderer 5 wieder in seiner Übernahmestellung angelangt ist, wird die Blockiervorrichtung 7 gelöst, während das nächste Paket 2 auf dem Zuförderer 3 in Pfeilrichtung 4 herantransportiert wird, um den beschriebenen Vorgang zu wiederholen. Durch mehrfache Wiederholung lassen sich zwei Stapel an den Stapelplätzen A und B bilden, wobei zum Stapeln am Stapelplatz A die Rückwärtsbewegung des Übergabeförderers 5 aus einer Position eingeleitet würde, wie sie beispielsweise in Figur 2 dargestellt ist. Aus dieser Position heraus würde die Blockiervorrichtung 7 das Transportband 6 wie beschrieben blockieren und der Übergabeförderer 5 würde mit hoher Geschwindigkeit in Pfeilrichtung 10 (Figur 4) soweit zurückbewegt, bis die vordere Umlenkrolle 5b des Übergabeförderers 5 unter dem Paket 2 hinwegbewegt ist und somit das Paket 3 senkrecht nach unten in die Position 8 fällt.

## Patentansprüche

1. Vorrichtung zum Stapeln von Stückgut in Transportbehälter, insbesondere zum Befüllen von Kartons oder Kisten mit flachen stapelfähigen Packungen oder Paketen, die über mindestens einen Zuförderer in den Bereich des Transportbehälters transportiert und in diesen geordnet übergeben werden,
**gekennzeichnet durch** einen unmittelbar unterhalb des Zuförderers (3) zwischen diesem und dem Transportbehälter (8) angeordneten Übergabeförderer (5), der aus einer Übernahmeposition für das Stückgut (2), in der sich mindestens das frei auskragende vordere Ende (3c) des Übergabeförderers (5) unterhalb des freien Endes des Zuförderers (3) befindet, horizontal in eine Übergabestellung bewegbar ist, in der sich das Stückgut (2) auf dem Transportband (6) des Übergabeförderers (5) oberhalb seiner im Transportbehälter (8) vorgesehenen Stapelposition (A;B) befindet, und das der Übergabeförderer (5) zum Übergeben des Stückgutes (2) in den Transportbehälter (8) aus dieser Position heraus mit der gleichen Geschwindigkeit in die Übernahmeposition zurückbewegbar ist, mit der die Auflageseite des Transportbandes (6) des Übergabeförderers (5) relativ zum Übergabeförderer (5) in der entgegengesetzten Richtung (10) bewegbar ist.

2. Vorrichtung zum Stapeln von Stückgut nach Anspruch 1, **dadurch gekennzeichnet, dass** die Transport- bzw. Bewegungsgeschwindigkeiten des Zuförderbandes (3) und des Übergabebandes (5) steuerbar sind.

3. Vorrichtung zum Stapeln von Stückgut nach Anspruch 1 und 2, **dadurch gekennzeichnet, dass** das Zuförderband (3) als Pufferband ausgebildet ist.

4. Vorrichtung zum Stapeln von Stückgut nach Anspruch 1 bis 3, **dadurch gekennzeichnet, dass** die exakte Übergabestellung für das Stückgut (2) durch mindestens einen Sensor erfassbar ist.

5. Vorrichtung zum Stapeln von Stückgut nach Anspruch 4, **dadurch gekennzeichnet, dass** der Sensor eine Fotozelle oder dergleichen ist.

6. Vorrichtung zum Stapeln von Stückgut nach einem der Ansprüche 1 bis 5, **dadurch gekennzeichnet, dass** das Transportband (6) während der Zurückbewegung (10) des Übergabeförderers (5) in die Übernahmeposition mittels einer an einem feststehenden Rahmenteil angeordneten Blockiervorrichtung (7) bei sich frei drehenden Umlenkrollen (5a, 5b) des Transportbandes (6) festsetzbar ist.

7. Vorrichtung zum Stapeln von Stückgut nach einem der Ansprüche 1 bis 6, **dadurch gekennzeichnet, dass** die Blockiervorrichtung (7) für das Transportband des Übergabeförderers am Rahmen des Zuförderers (3) angeordnet ist.

8. Vorrichtung zum Stapeln von Stückgut nach einem der Ansprüche 1 bis 7, **dadurch gekennzeichnet, dass** mehrere nebeneinander oder sich geordnet überlappende Stapel (A; B) von Stückgütern in einem und demselben Transportbehälter (8) stapelbar sind, indem die Horizontalbewegung des Übergabeförderers (5) in Relation zu dem vorgesehenen Stapelmuster steuerbar ist.

9. Vorrichtung zum Stapeln von Stückgut nach einem der Ansprüche 1 bis 8, **dadurch gekennzeichnet, dass** der Zuförderer (3) gegenüber dem horizontalen Übergabeförderer (5) in einem spitzen Winkel geneigt angeordnet ist.

10. Vorrichtung zum Stapeln von Stückgut nach Anspruch 6, **dadurch gekennzeichnet, dass** die Blockiervorrichtung (7) mit einem pneumatischen oder elektrischen Kolben-Zylinderantrieb aktivierbar ist.

11. Vorrichtung zum Stapeln von Stückgut nach einem der Ansprüche 1 bis 10, **dadurch gekennzeichnet, dass** die Horizontalbewegung des Übergabeförderers (5) über einen Schubstangenantrieb erfolgt.

12. Vorrichtung zum Stapeln von Stückgut nach einem der Ansprüche 1 bis 10, **dadurch gekennzeichnet, dass** die Horizontalbewegung des Übergabeförderers (5) über einen Zahnstangen oder Zahnriementrieb erfolgt.

13. Vorrichtung zum Stapeln von Stückgut nach einem der Ansprüche 1 bis 10, **dadurch gekennzeichnet, dass** die Horizontalbewegung des Übergabeförderers (5) über einen Linearmotorantrieb erfolgt.

14. Vorrichtung zum Stapeln von Stückgut nach einem der Ansprüche 1 bis 13, **dadurch gekennzeichnet, dass** die Vorrichtung zwischen einem Sorter (1) und einer Verpackungsstation (bei 8) eingesetzt ist.

15. Arbeitsverfahren zum Stapeln von Stückgut in Transportbehälter, insbesondere zum Befüllen von Kartons oder Kisten mit flachen stapelfähigen Packungen oder Paketen, die über mindestens einen Zuförderer in den Bereich des Transportbehälters transportiert und in diesen geordnet übergeben werden, mit den Merkmalen des Patentanspruchs 1, **gekennzeichnet durch** die Abfolge der folgenden Arbeitsschritte:
a. das mit gesteuerter Transportgeschwindigkeit auf dem Zuförderer transportierte Stückgut wird, ggf. nach einer Zwischenpufferung, an das frei auskragende vordere Ende des Übergabeförderers unterhalb des freien Endes des Zuförderers übergeben,
b. der Übergabeförderer bewegt sich während der Übernahme des Stückgutes horizontal in Transportrichtung des Zuförderers,
c. das Transportband des Übergabeförderers steht relativ zum horizontal bewegten Übergabeförderer still und bewegt das aufliegende Stückgut weiter, bis sich das Stückgut in der Übergabestellung oberhalb seiner im Transportbehälter vorgesehenen Stapelposition befindet,
d. das Transportband wird gegenüber dem Rahmen der Vorrichtung festgelegt, während der Übergabeförderer in seine Übernahmeposition zurückgefahren wird,
e. das Stückgut bleibt zunächst in seiner Übergabeposition auf dem blockierten Transportband und wird in den Transportbehälter definiert abgeworfen, sobald sich die dem Transportbehälter nahe Umlenkrolle des Transportbandes und damit der das Stückgut abstützende Bereich des Transportbandes zusammen mit dem Übergabeförderer unter dem Stückgut wegbewegt hat.

16. Arbeitsverfahren nach Anspruch 15, **dadurch gekennzeichnet, dass** die Bewegung des Übergabeförderers in seine Übernahmeposition mit gegenüber seiner Bewegung in die Übergabestellung erhöhter Geschwindigkeit erfolgt.
